# EUROPÄISCHE PATENTSCHRIFT

(11) **EP 2 008 954 B1**
(45) Veröffentlichungstag und Bekanntmachung des Hinweises auf die Patenterteilung: **19.05.2010**
(21) Anmeldenummer: 07012424.3
(22) Anmeldetag: 26.06.2007
(51) Int. Cl.: B65G 47/91, B65B 35/18

(54) **Vorrichtung zur Entnahme von Blisterpackungen aus einer Stanzstation**
Device for extracting blister packages from a die cutting station
Dispositif destiné à l'extraction de blisters d'un dispositif de coupe par estampage

(43) Veröffentlichungstag der Anmeldung: 31.12.2008
(73) Patentinhaber: UHLMANN PAC-SYSTEME GmbH & Co. KG, 88471 Laupheim (DE)
(72) Erfinder: Hähnel, Bernd, 76297 Stutensee (DE); Arb, Rudi, 88471 Laupheim (DE)
(74) Vertreter: Wächter, Jochen

(56) Entgegenhaltungen:
- EP-A- 1 595 828
- DE-A1-102004 028 212
- DE-A1-102004 043 332

## Beschreibung

Die Erfindung betrifft eine Vorrichtung zur Entnahme von Blisterpackungen aus einer diese aus einer Folienbahn trennenden Stanzstation und Übergabe der Blisterpackungen in eine unterhalb der Stanzstation angeordnete Packguttransportkette, mit zwei dem Ergreifen, dem Transfer und der Abgabe der Blisterpackungen dienenden Greifern.

Eine derartige Vorrichtung ist aus der DE 10 2004 043 332 A1 bekannt, bei der in Förderrichtung gesehen stromauf der Packguttransportkette mit dieser fluchtend eine Umsetzvorrichtung angeordnet ist, die zwei Umsetzarme umfasst, die um eine quer zur Packguttransportkette orientierte Schwenkachse verschwenkbar sind. Diese beiden Schwenkarme dienen dazu, aus einer Stanzstation wechselweise von einer identischen Position Blisterpackungen zu entnehmen und diese an demselben Ort in der Packguttransportkette abzulegen, also in einer Förderzelle der Packguttransportkette einen Stapel zu bilden. Damit die beiden Schwenkarme bei ihrem um 180° versetzten Phasenzyklus zwischen den beiden identischen Start- und Endpunkten sich nicht gegenseitig behindern, führen die Schwenkarme mit entgegengesetztem Drehsinn erfolgende Drehbewegungen durch, um so die auf ihrer Kreisbahn nach außen weisenden Greifer aneinander vorbeiführen zu können.

Bei dieser Vorrichtung ist es nachteilig, dass die Leistungsfähigkeit nicht ohne weiteres gesteigert werden kann, da es für das ordnungsgemäße Funktionieren zwingend erforderlich ist, die Blisterpackungen stets an dem einen Ort zu entnehmen und an dem einen anderen Ort abzulegen.

Der Erfindung liegt daher die Aufgabe zugrunde, eine Vorrichtung der eingangs genannten Art so auszubilden, dass ohne eine starke Steigerung des apparativen Aufwandes die Leistungsfähigkeit erhöht werden kann.

Diese Aufgabe wird nach der Erfindung bei einer Vorrichtung der eingangs genannten Art dadurch gelöst, dass rechts und links der Packguttransportkette jeweils einer der Greifer höhenverstellbar und um eine senkrecht zu der Förderrichtung und der Vertikalen orientierten Achse gelagert ist, derart, dass die Greifer bei ihrer Höhenverstellung aufgrund der momentanen Drehlage einander passieren können.

Bei dieser Vorrichtung ist es vorteilhaft, dass die Greifer nicht in Längsrichtung der Packguttransportkette vor dieser gestaffelt angeordnet werden müssen, was die Baulänge von Thermoformmaschinen, in der diese Vorrichtungen vorzugsweise eingesetzt werden, vergrößern müsste. Außerdem besteht durch den Verzicht auf die eine ausgezeichnete Position zu der Packguttransportkette die Möglichkeit, deren Längserstreckung zur Anordnung der Greifer auszunutzen.

Im Rahmen der Erfindung hat es sich als zweckmäßig erwiesen, dass die einander gegenüberliegenden Greifer für ihre Drehbewegung einen entgegengesetzten Drehsinn aufweisen.

Ganz besonders bevorzugt im Rahmen der Erfindung ist es, wenn die Greifer zu vieren vorgesehen und in zwei Greiferpaaren zusammengefasst sind, und wenn jedes Greiferpaar zur gemeinsamen Ausführung der Vertikalbewegung vorgesehen ist. Durch diese Gestaltung lässt sich in vorteilhafter Weise der einfache grundsätzliche Aufbau der Vorrichtung ausnutzen, um die Anzahl der Greifer zu erhöhen, wobei die Zusammenfassung von jeweils zwei Greifern in ein Greiferpaar sicherstellt, dass das ursprüngliche Bewegungsprofil für dieses Greiferpaar unverändert beibehalten bleiben kann. Das zweite Greiferpaar führt dann gegenüber dem ersten Greiferpaar die erforderliche Bewegungen um 180° phasenversetzt aus, so dass bei dieser Ausführungsform die Anzahl der Greifer verdoppelt werden kann um zeitgleich benachbarte Abgabepositionen in der Packguttransportkette anfahren zu können, was sich naturgemäß sehr vorteilhaft auf die Leistungsfähigkeit der Vorrichtung ausübt. Dabei bietet es sich dann an, dass die Achsen der Greifer jedes der Greiferpaare in Förderrichtung zueinander versetzt angeordnet sind, um so für diese Greifer einen größeren gegenseitigen Abstand bei ihrer Höhenverstellung bereitzustellen und das Passieren zu erleichtern.

Günstig ist es weiterhin, wenn jeder Greifer in einem Antriebsgehäuse gelagert ist, wobei selbstverständlich die beiden auf einer Seite der Packguttransportkette angeordneten Greifer auch in einem gemeinsamen Antriebsgehäuse gelagert sein können.

Ganz besonders bevorzugt im Rahmen der Erfindung ist es, wenn zwei nebeneinander angeordnete Folienbahnen in die Stanzstation geführt sind, wenn eines der Antriebsgehäuse mit Abstand zu der Packguttransportkette angeordnet und wenn der in diesem Antriebsgehäuse gelagerte Greifer in Richtung seiner Achse längsverstellbar ist. Bei dieser Gestaltung ergibt sich der Vorteil, dass die einbahnig aus der Stanzstation herausgeführte Packguttransportkette aus zwei Folienbahnen bestückt werden kann, es also möglich ist, schneller die aus den beiden Folienbahnen ausgestanzten Blisterpackungen der Packguttransportkette zuzuführen und in den Förderzellen der Packgutkette Blisterstapel zu bilden. Damit der in dem mit Abstand zu der Packguttransportkette angeordneten Antriebsgehäuse gelagerte Greifer diese Förderzelle der Packguttransportkette erreicht, ist dieser Greifer längsverstellbar gelagert, um seine horizontale Position zwischen der Ausrichtung gegenüber der einen Folienbahn und der Packguttransportkette wechseln zu können.

Werden dabei zwei Greiferpaare eingesetzt, so sind die zwei auf einer gemeinsamen Seite der Packguttransportkette angeordneten Greifer der beiden Greiferpaare in Richtung ihrer Achse längsverstellbar gelagert.

Um mit großer Prozesssicherheit und Zuverlässigkeit die gewünschte Drehung der Greifer bei ihrer Höhenverstellung zu erzeugen, ist jedem Greifer eine Kurvenrolle zugeordnet, die in einer Kurvenbahn geführt ist. Dabei ist die Gestaltung der Kurvenbahn so getroffen, dass die Kurvenbahn in ihrem oberen und unteren Abschnitt geradlinig und in ihrem Mittelabschnitt entgegen dem Drehsinn des Greifers verläuft, um so im oberen Abschnitt eine Entnahme der ausgestanzten Blisterpackungen aus der Folienbahn und dem Stanzwerkzeug der Stanzstation zu ermöglichen sowie im unteren Abschnitt die geradlinige Ablage ohne ein Verkanten in der Förderzelle der Packguttransportkette zu erzielen. Der Mittenabschnitt selber wird genutzt, um die Drehung des Greifers über die Kurvenrolle zu erzwingen. Die Kurvenrolle selber ist an einem Kurvenrollenhebel angeordnet, dem ein Stirnradpaar zugeordnet ist, um so die Drehbewegung des Kurvenrollenhebels verstärkt an die Drehachse des Greifers weiterzugeben. Weiterhin ist es im Rahmen der Erfindung vorgesehen, dass jedem Greifer ein Auswurfbehälter zugeordnet ist, dessen Boden unter die Trajektorie des Blisters bei seinem Transfer von der Stanzstation zu der Packguttransportkette ragt, wobei dieser Auswurfbehälter zur Prozesskontrolle und Qualitätssicherung genutzt wird, in dem der das Ausscheiden teilbefüllter Blisterpackungen ermöglicht, wenn die Greifer derartige teilbefüllte Blisterpackungen bei ihrer Drehbewegung in den

Auswurfbehälter abgeben.

Im folgenden wird die Erfindung an in der Zeichnung dargestellten Ausführungsbeispielen näher erläutert; es zeigen:
- Fig. 1: eine perspektivische Darstellung einer erfindungsgemäßen Vorrichtung zur Übergabe von Blisterpackungen aus zwei parallelen Folienbahnen und Abgabe an eine Packgutransportkette, mit zwei Greiferpaaren,
- Fig. 2: eine Vorderansicht der Vorrichtung aus Figur 1 mit den vier Greifern in ihren oberen und unteren Umkehrpunkten,
- Fig. 3: eine der Figur 2 entsprechende Darstellung zur einem späteren Zeitpunkt eines Zyklus,
- Fig. 4: eine der Figur 2 entsprechende Darstellung zu einem nochmals späteren Zeitpunkt eines Zyklus,
- Fig. 5: eine der Figur 2 entsprechende Darstellung kurz vor Vollendung eines Halbzyklus,
- Fig. 6: eine Draufsicht auf die Vorrichtung aus Figur 2, zur einfachen Übersicht dargestellt ohne die Folienbahnen sowie die Stanze,
- Fig. 7: eine alternative Ausführungsform in einer der Figur 6 entsprechenden Darstellung, mit zwei Greifern,
- Fig. 8: eine der Figur 7 entsprechende Darstellung einer weiteren Ausführungsform, bei der wegen der Einbahnigkeit der Folienbahnzuführung auf die Längsverstellung des Greifers in Richtung seiner Achse verzichtet ist, und
- Fig. 9: eine Seitenansicht eines geöffneten Antriebsgehäuses zur Erläuterung des Zusammenwirkens der Greifer mit den Kurvenbahnen sowie den Auswurfbehältern.

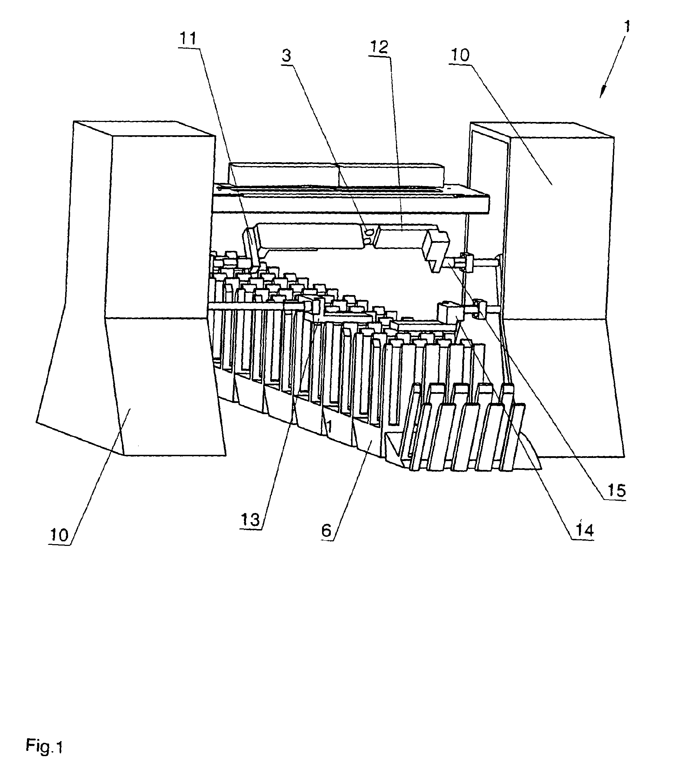

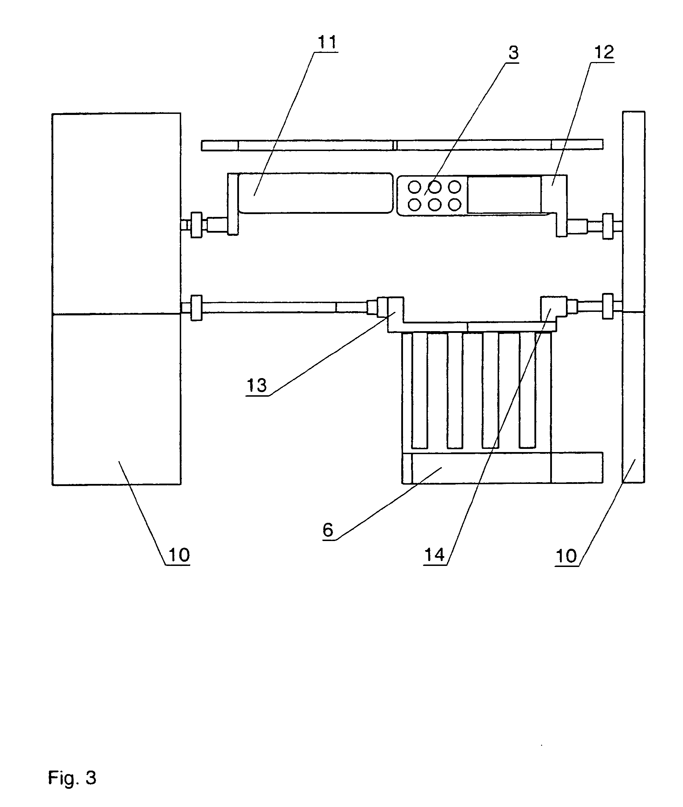

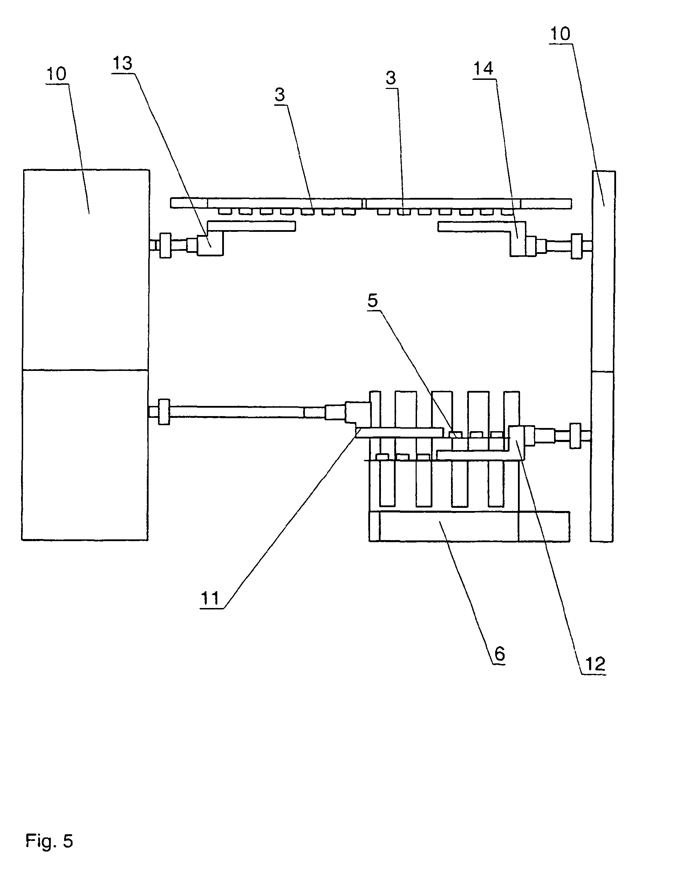

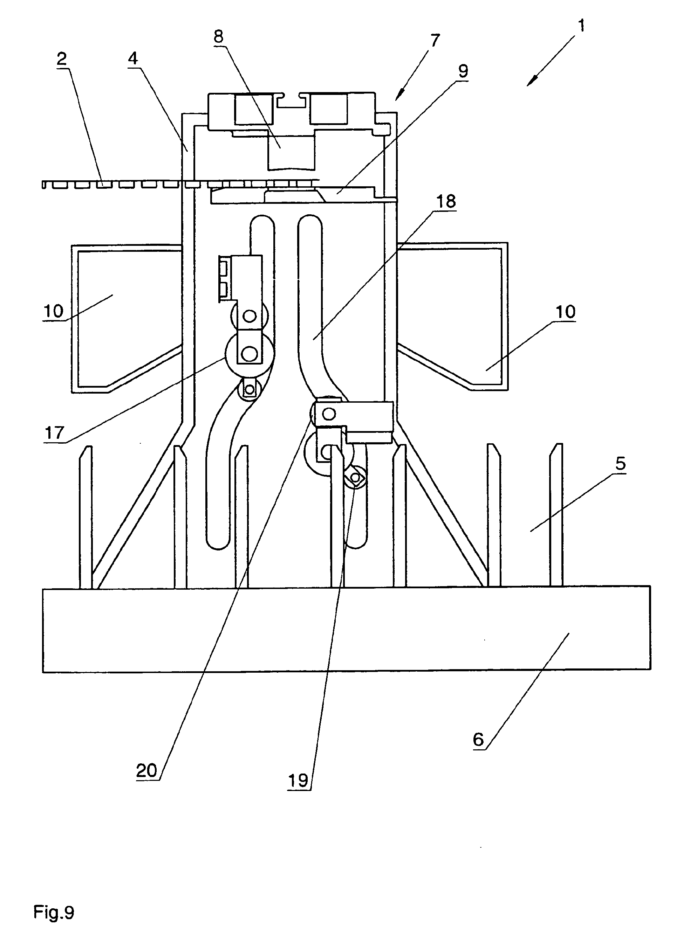

In der Zeichnung ist eine Vorrichtung 1 gezeigt, die dazu dient, in einer Folienbahn 2 herangeförderte Blisterpackungen 3 in einer Stanzstation 4 aus der Folienbahn 2 zu trennen und gezielt in die Förderzellen 5 einer Packguttransportkette 6 abzugeben. Zur einfachen Übersicht ist die Folienbahn 2 sowie das Stanzwerkzeug 7, nämlich der Stanzstempel 8 sowie die Stanzmatrize 9, lediglich in Figur 9 dargestellt, während die Figuren 1 bis 8 zur besseren Übersicht darauf ebenso verzichten wie auf die Darstellung des Auswurfbehälters 10.

Zweck der erfindungsgemäßen Vorrichtung 1 ist es, eine bessere Prozesskontrolle zu erzielen, also es zu vermeiden, dass nach der Entnahme der Blisterpackungen 3 aus der Stanzstation 4 mehrere Schnittstellen benötigt werden, bis aus den einzelnen Blisterpackungen 3 Stapel in der Packguttransportkette 6 gebildet werden können, also jede einzelne Blisterpackung 3 mehrmals losgelassen und neu erfasst werden muss, was das Risiko von Störungen erhöht.

Bei der erfindungsgemäßen Vorrichtung ist unterhalb der Stanzstation 4 die Packguttransportkette 6 angeordnet, wobei rechts und links der Packguttransportkette 6 in jeweils einem Antriebsgehäuse 10 Greifer 11, 12, 13, 14 geordnet sind, die dem Ergreifen, dem Transfer und der Abgabe der Blisterpackungen 3 dienen. Die Greifer 11, 12, 13, 14 sind höhenverstellbar und um eine senkrecht zu der Förderrichtung und der Vertikalen orientierten Achse 15 drehbar gelagert, derart, dass die Greifer 11, 12, 13, 14 bei ihrer Höhenverstellung aufgrund der momentanen Drehlage einander passieren können, wobei die einander gegenüberliegenden Greifer 11, 12 für ihre Drehbewegung einen entgegengesetzten Drehsinn aufweisen. Bei dem in der Figur 1 dargestellten Ausführungsbeispiel sind die Greifer 11, 12, 13, 14 zu vieren vorgesehen und in zwei Greiferpaare zusammengefasst, wobei jedes Greiferpaar zur gemeinsamen Ausführung der Vertikalbewegung vorgesehen ist und die Achsen der Greifer 11, 12, 13, 14 jedes der Greiferpaare in Förderrichtung zueinander versetzt angeordnet sind.

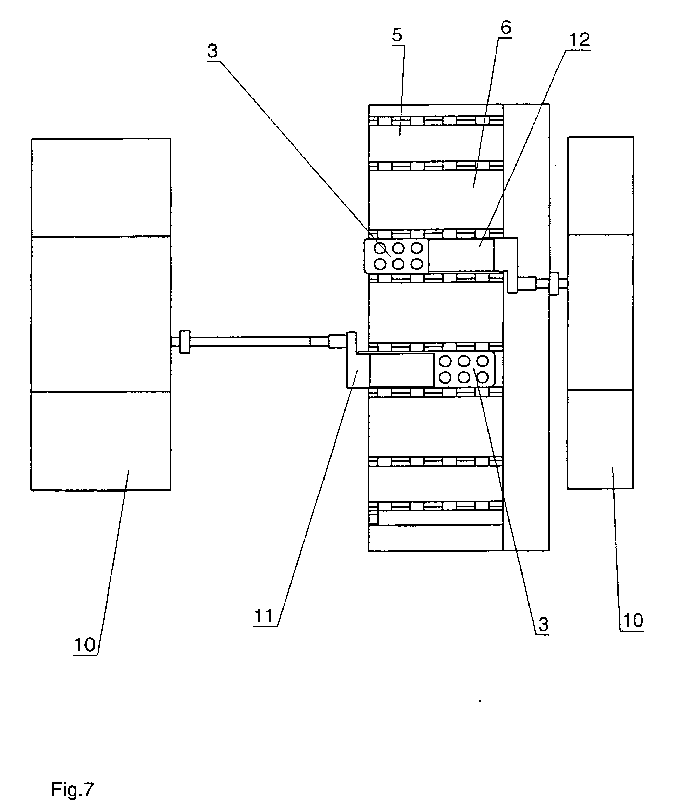

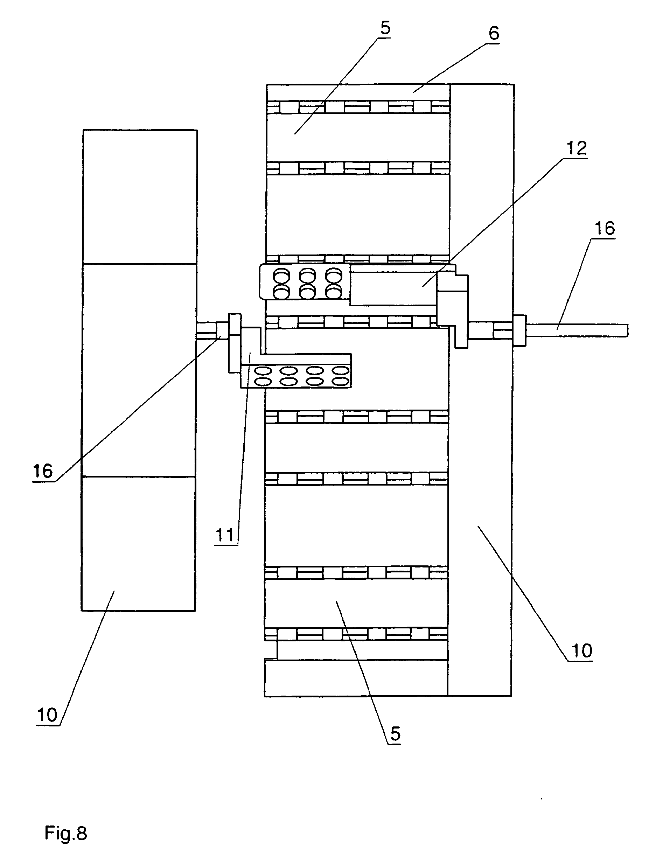

Bestehen geringere Anforderungen an die Leistungsfähigkeit der erfindungsgemäßen Vorrichtung, so besteht die in den Figuren 7 und 8 dargestellte Möglichkeit, lediglich zwei Greifer 11, 12 einzusetzen, bei denen dann die Achsen 16 in Figur 8 miteinander fluchten und die Greifer 11, 12 unter Ausnutzung einer Phasenversetzung die Blisterpackungen 3 in die selbe Förderzelle 5 ablegen. Bei dieser Ausführungsform aus der Figur 8 besteht, wie vorstehend bereits dargelegt, geringere Anforderung an die Leistungsfähigkeit, so dass es möglich ist, die Blisterpackungen 3 nur einer Folienbahn 2 mit den beiden Greifern 11, 12 zu entnehmen und an die Packguttransportkette 6 abzugeben, während die Reduzierung der Leistungsfähigkeit gemäß der Figur 7 sich aus der reduzierten Anzahl der Greifer 11, 12 ergibt.

Leistungfähiger ist allerdings die in den Figuren 1 bis 6 dargestellte Gestaltung, bei der eine zweibahnige Ausführung gewählt ist, nämlich die Zuführung von Blisterpackungen 3 in zwei parallelen Folienbahnen 2 in die Stanzstation 4, wobei in der Stanzstation 4 simultan zwei nebeneinanderliegende Blisterpackungen 2 ausgestanzt und von den Greifern 11, 12, 13, 14 übernommen werden. Auch bei dieser Gestaltung ist es wünschenswert und erforderlich, dass die Blisterpackungen 3 der einen Packguttransportkette 6 zugeführt werden, so dass eines der Antriebsgehäuse 10 mit Abstand zu der Packguttransportkette 6 angeordnet ist, um Platz für die zweite Folienbahn 2 zu schaffen und der in diesem Antriebsgehäuse 10 gelagerte Greifer 11, 13 in Richtung seiner Achse längsverstellbar ist, also zwischen den beiden Antriebsgehäusen 10 ausreichend Platz verbleibt, um zwei Folienbahnen 2 nebeneinander hindurchzuführen, zugleich aber der sich dadurch ergebende Abstand des einen Greifers 11, 13 von der Packguttransportkette 6 durch dessen Längsverstellbarkeit in Richtung seiner Achse kompensiert wird. Bei dem in der Figur 1 dargestellten Ausführungsbeispiel sind die links auf einer gemeinsamen Seite der Packguttransportkette 6 angeordneten Greifer 11, 13 der beiden Greiferpaare in Richtung ihrer Längsachse verstellbar.

Um die zum kontrollierten gegenseitigen Passieren der beiden Greifer 11, 12, 13, 14 eines Greiferpaares erforderlich Bahnkurve bzw. Trajektorie zu erzeugen, ist jedem Greifer 11, 12, 13, 14 eine Kurvenrolle 17 zugeordnet, die in einer Kurvenbahn 18 geführt ist, wobei die Kurvenbahn 18 in ihrem oberen und unteren Anschnitt geradlinig und in ihrem Mittenabschnitt entgegen dem Drehsinn des Greifers 11, 12, 13, 14 verläuft. Die Kurvenrolle 17 ist dabei an einem Kurvenrollenhebel 19 angeordnet, dem ein Stirnradpaar 20 zugeordnet ist. Figur 9 lässt weiterhin erkennen, dass jedem Greifer 11, 12, 13, 14 ein Auswurfbehälter 10 zugeordnet ist, dessen Boden unter die Trajektorie der Blisterpackungen 3 bei seinem Transfer von der Stanzstation 4 zu der Packguttransportkette 6 ragt.

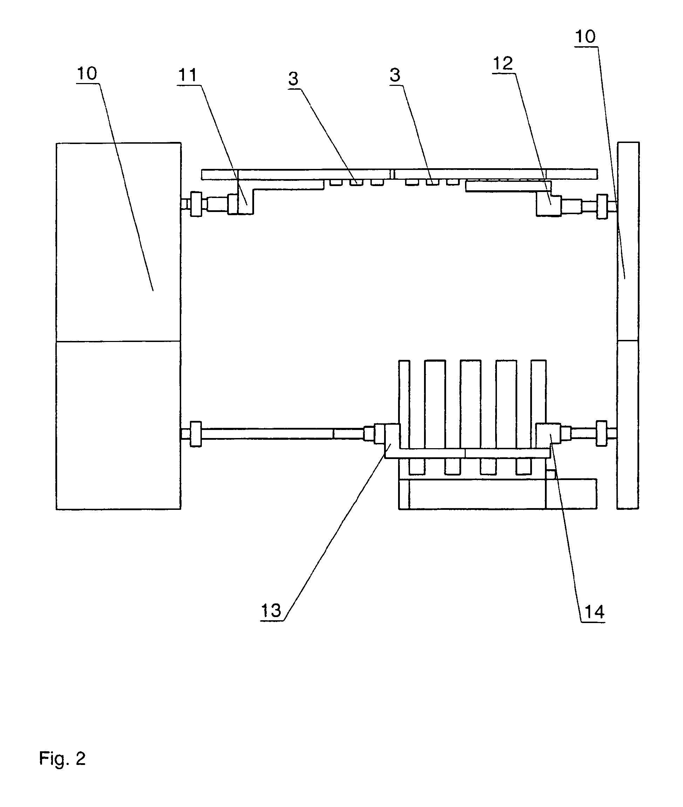

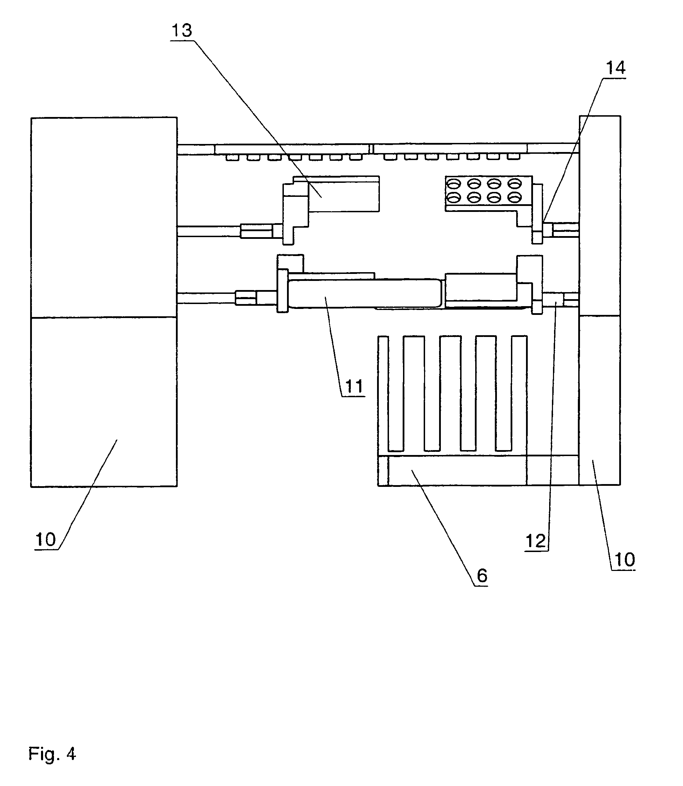

Im folgenden wird zur weiteren Erläuterung der Erfindung anhand des Ausführungsbeispiels aus den Figuren 1 bis 5 die Funktionsweise der erfindungsgemäßen Vorrichtung 1 erläutert. Ausgehend von Figur 2 ist dabei ein Zustand gezeigt, bei dem die beiden Greifer 11, 12 des einen Greiferpaares sich in ihrem oberen Umkehrpunkt befinden und dabei gerade die in der Stanzstation 4 aus den beiden Folienbahnen 2 ausgestanzten Blisterpackungen 3 ergreifen, während die beiden Greifer 13,14 des anderen Greiferpaares die Blisterpackungen 3 in benachbarte Förderzellen 5 der Packguttransportkette 6 abgeben. Bei einem Fortschreiten des Zyklus werden die Greifer 11, 12 des oberen Greiferpaares und die Greifer 13, 14 des unteren Greiferpaares zunächst geradlinig nach unten bzw. oben verstellt, wobei sich an diese geradlinige Bewegung eine Drehbewegung anschließt und die beiden Greifer 11, 12, 13, 14 eines Greiferpaares die Drehung in entgegengesetzte Drehrichtungen ausführen, damit die beiden Greifer 11, 12 mit den Blisterpackungen 3 bei ihrer Abwärtsbewegung bzw. die beiden Greifer 13, 14 ohne die Blisterpackungen 3 bei ihrer Aufwärtsbewegung auf in unterschiedliche Richtungen weisenden Bögen aneinander vorbeilaufen können. Figur 4 zeigt dabei einen Ausschnitt eines Zyklus, bei dem das zuvor untere Greiferpaar sich nunmehr oberhalb des zuvor oberen Greiferpaares befindet und sich vorbereitet, am oberen Umkehrpunkt zwei Blisterpackungen 3 zu ergreifen, während das nunmehrige untere Greiferpaar in die beiden benachbarten Förderzellen 5 in die Packguttransportkette 6 eintaucht, um die Blisterpackungen 3 abzugeben. Da die Steuerung der Greifer 11, 12, 13, 14 über Servomotoren erfolgt, besteht auch die Möglichkeit, durch eine Variation des Verstellweges in einfacher Weise die Stapelbildung der Blisterpackungen 3 in den Förderzellen 5 der Packgutkette 6 zu ermöglichen. An diesem Zustand schließt sich ein weiterer Halbzyklus an, der der Figur 2 mit lediglich vertauschten Greiferpaaren entspricht.

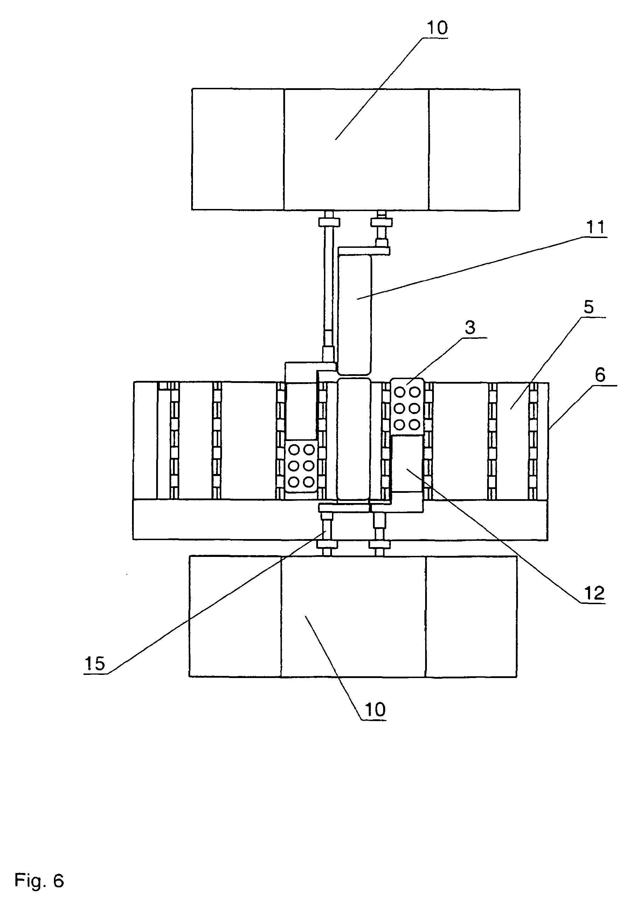

Figur 6 lässt dabei deutlich werden, dass die in den Figuren 2 bis 5 links dargestellten Greifer 11, 13 zusätzlich zu ihrer Höhenverstellung und Drehbewegung auch in Richtung ihrer Längsachse verstellt werden müssen, um den durch die Breite der Folienbahn 2 erzwungenen Abstand zu der Packguttransportkette 6 zu überbrücken.

Zu beachten ist weiterhin, dass mit dieser Vorrichtung auch ein Ausscheiden von leer- und teilbefüllten Blisterpackungen 3 möglich ist, nämlich in dem bei Leerblistern ein Hub der Greifer 11, 12, 13, 14 komplett unterdrückt wird, so dass die Leerblister im Stanzabfall landen. Bei teilbefüllten Blisterpackungen 3 werden diese mit den Greifern 11, 12, 13, 14 zunächst entnommen, dann aber bei der Drehbewegung der Greifer 11, 12, 13, 14 an die Auswurfbehälter 10 abgegeben.

## Patentansprüche

1. Vorrichtung zur Entnahme von Blisterpackungen (3) aus einer diese aus einer Folienbahn (2) trennenden Stanzstation (4) und zur Übergabe der Blisterpackungen (3) in eine unterhalb der Stanzstation (4) angeordnete Packguttransportkette (6), mit zwei dem Ergreifen, dem Transfer und der Abgabe der Blisterpackungen (3) dienenden Greifern (11, 12), **dadurch gekennzeichnet, dass** rechts und links der Packguttransportkette (6) jeweils einer der Greifer (11, 12) höhenverstellbar und um eine senkrecht zur Förderrichtung und zur Vertikalen orientierten Achse drehbar gelagert ist, derart, dass die Greifer (11, 12) bei ihrer Höhenverstellung aufgrund der momentanen Drehlage einander passieren können.

2. Vorrichtung nach Anspruch 1, **dadurch gekennzeichnet, dass** die einander gegenüber liegenden Greifer (11,12) für ihre Drehbewegung einen entgegengesetzten Drehsinn aufweisen.

3. Vorrichtung nach Anspruch 1 oder 2, **dadurch gekennzeichnet, dass** die Greifer (11, 12, 13, 14) zu vieren vorgesehen und in zwei Greiferpaaren zusammengefasst sind, und dass jedes Greiferpaar zur gemeinsamen Ausführung der Vertikalbewegung vorgesehen ist.

4. Vorrichtung nach Anspruch 3, **dadurch gekennzeichnet, dass** die Achsen der Greifer (11, 12, 13, 14) jedes der Greiferpaare in Förderrichtung zueinander versetzt angeordnet sind.

5. Vorrichtung nach einem der Ansprüche 1 bis 4, **dadurch gekennzeichnet, dass** jeder Greifer (11, 12, 13, 14) in einem Antriebsgehäuse (10) gelagert ist.

6. Vorrichtung nach Anspruch 5, **dadurch gekennzeichnet, dass** zwei nebeneinander angeordnete Folienbahnen (2) in die Stanzstation (4) geführt sind, dass eines der Antriebsgehäuse (10) mit Abstand zu der Packguttransportkette (6) angeordnet ist und dass der in diesem Antriebsgehäuse (10) gelagerte Greifer (11, 13) in Richtung seiner Achse längsverstellbar ist.

7. Vorrichtung nach Anspruch 6, **dadurch gekennzeichnet, dass** die auf einer gemeinsamen Seite der Packguttransportkette (6) angeordneten Greifer (11, 13) der beiden Greiferpaare in Richtung ihrer Achse längsverstellbar gelagert sind.

8. Vorrichtung nach einem der Ansprüche 1 bis 7, **dadurch gekennzeichnet, dass** jedem Greifer (11, 12, 13, 14) eine Kurvenrolle (17) zugeordnet ist, die in einer Kurvenbahn (18) geführt ist.

9. Vorrichtung nach Anspruch 8, **dadurch gekennzeichnet, dass** die Kurvenbahn (18) in ihrem oberen und unteren Abschnitt geradlinig und in ihrem Mittenabschnitt entgegen dem Drehsinn des Greifers (11, 12, 13, 14) verläuft.

10. Vorrichtung nach Anspruch 8 oder 9, **dadurch gekennzeichnet, dass** die Kurvenrolle (17) an einem Kurvenrollenhebel (19) angeordnet ist.

11. Vorrichtung nach einem der Ansprüche 1 bis 10, **dadurch gekennzeichnet, dass** jedem Greifer (11, 12, 13, 14) ein Auswurfbehälter (10) zugeordnet ist, dessen Boden unter die Trajektorie der Blisterpackung (3) bei ihrem Transfer von der Stanzstation (4) zu der Packguttransportkette (6) ragt.

12. Vorrichtung nach Anspruch 10 oder 11, **dadurch gekennzeichnet, dass** dem Kurvenrollenhebel (19) ein Stirnradpaar (20) zugeordnet ist.

13. Vorrichtung nach einem der Ansprüche 1 bis 3, **dadurch gekennzeichnet, dass** zum Antrieb der Greifer (11, 12, 13, 14) Servomotoren vorgesehen sind.

## Claims

1. Device for removing blister packs (3) from a die-cutting station (4) which separates said blister packs from a film web (2) and for transferring the blister packs (3) into a packaged goods chain conveyor (6) arranged below the die-cutting station (4), comprising two grippers (11, 12) for gripping, transferring and releasing the blister packs (3), **characterised in that** one of the grippers (11, 12) on the right and left-hand side respectively of the packaged goods chain conveyor (6) is vertically adjustable and is mounted rotatably about an axis which is oriented perpendicular to the conveying direction and to the vertical, in such a way that the grippers (11, 12) can pass one another when vertically adjusted owing to the instantaneous rotational position.

2. Device according to claim 1, **characterised in that** the mutually opposed grippers (11, 12) rotate in opposite directions.

3. Device according to either claim 1 or claim 2, **characterised in that** four grippers (11, 12, 13, 14) are provided and are grouped in two gripper pairs, and **in that** each gripper pair is provided to carry out the vertical movement together.

4. Device according to claim 3, **characterised in that** the axes of the grippers (11, 12, 13, 14) of each gripper pair are arranged offset to one another in the conveying direction.

5. Device according to any one of claims 1 to 4, **characterised in that** each gripper (11, 12, 13, 14) is mounted in a drive housing (10).

6. Device according to claim 5, **characterised in that** two film webs (2) arranged side by side are guided into the die-cutting station (4), **in that** one of the drive housings (10) is arranged at a distance from the packaged goods chain conveyor (6), and **in that** the gripper (11, 13) mounted in said drive housing (10) is longitudinally displaceable in the direction of the axis thereof.

7. Device according to claim 6, **characterised in that** the grippers (11, 13), arranged on a common side of the packaged goods chain conveyor (6), of the two gripper pairs are mounted so as to be displaceable in the direction of the axis thereof.

8. Device according to any one of claims 1 to 7, **characterised in that** a guide roller (17), which is guided in a curved track (18), is associated with each gripper (11, 12, 13, 14).

9. Device according to claim 8, **characterised in that** the upper and lower portions of the curved track (18) are straight and the central portion thereof extends in the direction counter to the direction of rotation of the gripper (11, 12, 13, 14).

10. Device according to either claim 8 or claim 9, **characterised in that** the guide roller (17) is arranged on a guide roller lever (19).

11. Device according to any one of claims 1 to 10, **characterised in that** a discharge container (10) is associated with each gripper (11, 12, 13, 14), the base of said discharge container projecting under the trajectory of the blister pack (3) as it is transferred from the die- cutting station (4) to the packaged goods chain conveyor (6).

12. Device according to either claim 10 or claim 11, **characterised in that** a spur gear pair (20) is associated with the guide roller lever (19).

13. Device according to any one of claims 1 to 3, **characterised in that** servomotors are provided for driving the grippers (11, 12, 13, 14).

## Revendications

1. Dispositif destiné au retrait de blisters (3) d'un poste de découpe (4), qui sépare ces derniers d'une nappe de feuille (2), et au transfert des blisters (3) dans une chaîne de transport (6) des emballages, disposée au-dessous du poste de découpe (4), comprenant deux pinces (11, 12) qui servent à la saisie, au transfert et à la distribution des blisters (3), **caractérisé en ce que**, à droite et à gauche de la chaîne de transport (6) des emballages, chacune de l'une des pinces (11, 12) est mobile en hauteur et montée tournante autour d'un axe orienté perpendiculairement à la direction de transport et par rapport à la verticale de telle sorte que les pinces (11, 12), lors de leur déplacement en hauteur, peuvent passer l'une l'autre en raison de la position de rotation momentanée.

2. Dispositif suivant la revendication 1, **caractérisé en ce que** les pinces (11, 12), en vis-à-vis l'une de l'autre, présentent un sens de rotation opposé pour leur mouvement de rotation.

3. Dispositif suivant l'une des revendications 1 et 2, **caractérisé en ce que** les pinces (11, 12, 13, 14) sont prévues en quadruple et regroupées en deux paires de pinces, et que chaque paire de pinces est prévue pour l'exécution commune du déplacement vertical.

4. Dispositif suivant la revendication 3, **caractérisé en ce que** les axes des pinces (11, 12, 13, 14) de chacune des paires de pinces sont disposés en déport mutuel dans la direction de transport.

5. Dispositif suivant l'une des revendications 1 à 4, **caractérisé en ce que** chaque pince (11, 12, 13, 14) est montée dans un carter d'entraînement (10).

6. Dispositif suivant la revendication 5, **caractérisé en ce que** deux nappes de feuilles (2) juxtaposées sont guidées dans le poste de découpe (4), que l'un des carters d'entraînement (10) est disposé à distance de la chaîne de transport (6) des emballages et que la pince (11, 13), montée dans ce carter d'entraînement, est mobile longitudinalement en direction de son axe.

7. Dispositif suivant la revendication 6, **caractérisé en ce que** les pinces (11, 13) des deux paires de pinces, disposées sur un côté commun de la chaîne de transport (6) des emballages, sont montées avec une possibilité de déplacement longitudinal en direction de leur axe.

8. Dispositif suivant l'une des revendications 1 à 7, **caractérisé en ce qu'**un rouleau de guidage (17), guidé dans une trajectoire curviligne (18), est associé à chaque pince (11, 12, 13, 14).

9. Dispositif suivant la revendication 8, **caractérisé en ce que** la trajectoire curviligne (18) s'étend linéairement dans sa section supérieure et dans sa section inférieure et dans le sens contraire au sens de rotation de la pince (11, 12, 13, 14) dans sa section centrale.

10. Dispositif suivant l'une des revendications 8 et 9, **caractérisé en ce que** le rouleau de guidage (17) est disposé sur un levier de rouleau de guidage (19).

11. Dispositif suivant l'une des revendications 1 à 10, **caractérisé en ce qu'**un bac d'éjection (10) est associé à chaque pince (11, 12, 13, 14), bac dont le fond pénètre au-dessous de la trajectoire du blister (3) lors de son transfert du poste de découpe (4) en direction de la chaîne de transport des emballages (6).

12. Dispositif suivant l'une des revendications 10 et 11, **caractérisé en ce qu'**une paire de roues droites (20) est associée au levier de rouleau de guidage (19).

13. Dispositif suivant l'une des revendications 1 à 3, **caractérisé en ce que** des servomoteurs sont prévus pour l'entraînement des pinces (11, 12, 13, 14).
